# EUROPÄISCHE PATENTSCHRIFT

(11) **EP 2 092 829 B1**
(45) Veröffentlichungstag und Bekanntmachung des Hinweises auf die Patenterteilung: **16.08.2017**
(21) Anmeldenummer: 09153123.6
(22) Anmeldetag: 18.02.2009
(51) Int. Cl.: A22B 5/00, G01B 11/02

(54) **Verfahren zum automatisierten Bearbeiten von Schlachttieren**
Method for automatically processing animals for slaughter
Procédé de traitement automatisé d'animaux d'abattage

(30) Priorität: 19.02.2008 DE 102008002776
(43) Veröffentlichungstag der Anmeldung: 26.08.2009
(73) Patentinhaber: BANSS SCHLACHT- UND FÖRDERTECHNIK GMBH, 35216 Biedenkopf (DE)
(72) Erfinder:
(74) Vertreter: Stoffregen, Hans-Herbert

(56) Entgegenhaltungen:
- WO-A-93/01725
- WO-A-02/061368
- WO-A-2006/063744
- WO-A1-2007/048576
- US-B1- 6 219 461
- US-B1- 6 623 348

## Beschreibung

Die Erfindung bezieht sich auf ein Verfahren zum automatisierten Bearbeiten, wie Schlacht- und/oder Zerlegearbeiten, von Schlachttieren mittels einer Handhabungseinrichtung, wobei das jeweilige zu bearbeitende Schlachttier optisch gemessen und aus den Messungen durch Bildverarbeitung 2D- und 3D-Daten ermittelt werden und aus den 2D- und 3D-Daten Signale zum Steuern der Handhabungseinrichtung generiert werden.

In der DE.Z.: Fleischwirtschaft 8/2005, Seiten 25 - 28, Schmidt, F.: Roboter toppen Spezialmaschinen" wird ein Verfahren beschrieben, bei dem Schlachtschweine am Anfang einer Roboterlinie durch eine Messstation geführt werden, in der durch einen oder mehrere Laserscanner ein Oberprofil des Schlachttierkörpers digitalisiert wird. Mittels eines Roboters (Handhabungseinrichtung) können sodann auf der Basis der digitalisierten Werte Vorderpfoten abgekniffen, Rektum freigeschnitten, Schlossknochen getrennt und Bauch und Brustbein geöffnet werden. Während der einzelnen Bearbeitungsschritte wird das Schlachttier gefördert, so dass im kontinuierlichen Betrieb, d. h., das vom Roboter geführte Werkzeug fährt synchron zur Transportbewegung des Schlachttierförderers mit, die Arbeiten an dem Schlachttier durchgeführt werden. Basis der Tätigkeiten sind die in der Messstation ermittelten Scanndaten, wobei ausschließlich die Bereiche gescannt werden, in denen eine Bearbeitung erfolgen soll.

Der US-B-6,623,348 sind ein Verfahren und eine Vorrichtung zum Schlachten und Bearbeiten von Tieren zu entnehmen. Um einen menschlichen Eingriff beim Schlachten und Bearbeiten zu minimieren, wird das Schlachttier oder ein Abschnitt von diesem mittels eines Sensors erfasst, um sodann von dem Sensor ermittelte Messwerte zu digitalisieren und einer Steuerung zuzuführen, von der eine Handhabungseinrichtung wie Roboter zum Durchführen der einzelnen Bearbeitungsschritte angesteuert wird.

Um die Bereiche des Schlachttieres zu identifizieren, in denen Bearbeitungsschritte durchgeführt werden sollen, wird den Messwerten ein Rasterbild überlagert. Für jeden Bearbeitungsschritt erfolgt ein gesondertes Erfassen des entsprechenden Bereichs, um die entsprechenden Messwerte einer Steuerung und damit einem Roboter zuzuführen. Dabei besteht die Möglichkeit, die Daten einzelner Bearbeitungsstationen einer Gesamtsteuerung zuzuführen. Auch die Verknüpfung über ein BUS-System ist möglich.

Eine Vorrichtung und ein Verfahren zum Entschwarten oder Trimmen eines Fleischstückes ist Gegenstand der DE-A-10 2004 017 037. Hierzu wird das beim Entschwarten oder Trimmen abzutrennende Teil in zwei oder drei Dimensionen mit Hilfe einer Kamera und einem Bildverarbeitungssystem und mit einem Abstandsmesssystem ermittelt, so dass punktuell Informationen über das Teil zur Verfügung stehen.

Gegenstand der WO-A-2007/048576 ist ein Verfahren zur Durchführung von Bearbeitungsschritten an Schlachttieren. Dabei wird zunächst ein Schlachttier zur Gewinnung eines Oberflächenprofils optisch gemessen, um erste Daten zu gewinnen. In den einzelnen Bearbeitungsstationen werden sodann die Bereiche 2- oder 3-dimensional des Schlachttieres optisch gemessen, in denen Bearbeitungstätigkeiten durchzuführen sind. Die entsprechenden Daten werden sodann mit den Oberflächenprofildaten verknüpft, um eine Handhabungseinrichtung zu steuern. Durch diese Maßnahmen konnten die Bearbeitungsqualität und Wirtschaftlichkeit von automatisierten Schlachtbetrieben erheblich erhöht werden.

Aus der WO-A-2006/063744 ist ein Verfahren zum Bearbeiten von Schlachttierkörperhälften bekannt. Diese werden während des Transports gescannt, um mittels einer Bildverarbeitung Signale zu generieren, mittels der ein Roboter gesteuert wird.

Um die Form von Lebensmittelgegenständen zu ermitteln, sieht die WO-A-02/061368 vor, dass die Gegenstände mit Laserstrahlung beaufschlagt werden, um zum einen von unmittelbar reflektierter Strahlung und zum anderen von über Spiegel reflektierter Strahlung zweidimensionale Bilder zu erzeugen, die sodann zu einem dreidimensionalen Bild verknüpft werden.

Der vorliegenden Erfindung liegt die Aufgabe zu Grunde, ein Verfahren der eingangs genannten Art so weiterzuführen, dass eine überaus konturtreue Werkzeugführung und damit ein präzises Bearbeiten, insbesondere eine präzise Schnittführung an den Schlachttieren möglich ist. Insbesondere soll nach einem weiteren Aspekt der Erfindung erreicht werden, dass die bei den Bearbeitungsschritten einwirkenden Kräfte minimiert werden, um unkontrollierte Positionsveränderungen des Schlachttieres zu vermeiden.

Die Aufgabe wird erfindungsgemäß im Wesentlichen dadurch gelöst, dass das Schlachttier mit einem optischen Sensor gemessen wird und aus der jeweiligen Messung des einen optischen Sensors durch Bildverarbeitung sowohl 3D-Daten als auch 2D-Daten des Schlachttieres ermittelt werden, dass aus den 2D-Daten der Bereich des Schlachttieres bestimmt wird, der mittels der Handhabungseinrichtung zu bearbeiten ist, und dass beim Bearbeiten des Schlachttieres die von derselben Messung ermittelten 3D-Daten zur Berücksichtigung des Oberflächenprofils des Schlachttieres einbezogen werden.

Erfindungsgemäß wird mit einem optischen Sensor wie Streifenscanner ein Bild des zu bearbeitenden Schlachttieres aufgenommen, das sodann derart verarbeitet wird, dass sowohl das Oberflächenprofil (dreidimensionale bzw. 3D-Daten) als auch Konturdaten wie Oberflächen- oder Randkonturen (zweidimensionale bzw. 2D-Daten) berücksichtigt, also quasi überlagert werden, um aufgrund dieser Daten die Handhabungseinrichtung zu steuern. Die 2D-Daten ermöglichen eine hochpräzise Bestimmung der Bereiche, wie Schnittlinien, die bearbeitet werden sollen. Die entsprechenden in einer Ebene verlaufenden Ortskoordinaten werden sodann mit den Daten des Oberflächen- oder Hüllenprofils verknüpft, um die erforderliche Raumkoordinate zu gewinnen, die zu einer konturtreuen Werkzeugführung und zur Durchführung präziser Arbeiten wie Schnittpfade durch das Handhabungsgerät erforderlich sind.

Man nutzt den Vorteil der durch Bildverarbeitung überaus genau zu ermittelnden Konturen des Schlachttieres aus, die bei einem 2D-Bild aufgrund von Remissionswerten des Schlachttieres und Kantenhervorhebung gewonnen werden können. Diese Darstellung wird sodann mit dem dreidimensionalen Oberflächenprofil überlagert, das bezüglich der Konturen aufgrund der bei der Aufnahme des Bildes üblicherweise sich bewegenden Schlachttieres relativ unscharf ist. Mit anderen Worten wird auf das relativ unscharfe 3D-Bild die Kontur des scharfen 2D-Bildes projiziert bzw. umgekehrt, so dass infolgedessen eine hochpräzise Bestimmung der Bereiche erfolgt, in bzw. an denen die Handhabungseinrichtung Arbeiten durchführen soll.

Um die Konturen des optisch gemessenen Schlachttieres in hinreichender Genauigkeit zu gewinnen, kann eine Bildverarbeitung des zweidimensionalen Bildes des Schlachttieres mit einem Gradientenfilter erfolgen.

In hervorzuhebender Ausgestaltung der Erfindung ist vorgesehen, dass aus den 2D-Daten und den 3D-Daten biometrische Daten des zu bearbeitenden Schlachttieres abgeleitet werden, die mit den biometrischen Daten zugeordneten Daten einer Bibliothek als dritte Daten zur Erzeugung der Steuersignale verknüpft werden, wobei die dritten Daten Charakteristika des zu bearbeitenden Schlachttiers berücksichtigen, die beim optischen Messen unberücksichtigt bleiben, insbesondere z. B. Lage und Erstreckung von Eingeweide, Bauchdeckendicke oder Ähnliches.

In der Bibliothek sind folglich aufgrund von zuvor erfolgter Messungen von Schlachttieren biometrische Daten wie Länge des Schlachttieres, Umfang des Schlachttieres oder Abmessung charakteristischer Bereiche wie Länge der Vorder- und Hinterbeine abgelegt und diesen wiederum beim optischen Messen nicht erfassbare Charakteristika des Schlachttieres, wie z. B. Lage und Erstreckung der Eingeweide, Bauchdeckendicke oder Ähnliches zugeordnet. Somit stehen indirekt aufgrund der Auswertung der 3D- und/oder 2D-Daten des von dem Schlachttier aufgenommenen Bildes entsprechende Werte zur Verfügung, die beim Bearbeiten des Schlachttieres von Relevanz sind.

Eigenerfinderisch zeichnet sich die Erfindung dadurch aus, dass unter Berücksichtigung der ersten und zweiten Daten sowie der der die Dicke der Bauchdecke berücksichtigenden dritten Daten das Öffnen des vertikal hängenden transportierten Schlachttieres mit den Verfahrensschritten erfolgt:
- Einschneiden des Schlachttieres in oder nahezu in der Symmetrieebene des Schlachttiers im Halsbereich oder nahe der Hinterbeine,
- Durchführen eines im Wesentlichen vertikalen Schnittes zum Durchtrennen der Bauchdecke und des Brustbeines,
- wobei beim Schneiden der Bauchwand die Eingeweide vom Schnittbereich von der Bauchwand mittels eines in das Schlachttier eingeführten Abweisers ferngehalten werden, der aufgrund der verknüpften ersten, zweiten und dritten Daten drucklos oder im Wesentlichen drucklos entlang Innenseite der Bauchdecke geführt wird.

Zwar ist es bekannt, während des Öffnens des Schlachttieres, also Durchtrennen der Bauchdecke und des Brustbeines, in das Innere des Schlachttieres einen Abweiser einzuführen, um die Eingeweide fernzuhalten, so dass diese beim Durchtrennen nicht beschädigt werden, wodurch anderenfalls Schlachtschäden auftreten würden. Insoweit wird beispielhaft auf die EP-B-0 594 791, DE-C-237 892, RU-A-599 780 oder AU-B-57 360 verwiesen. Allerdings wird nach dem Stand der Technik über den Abweiser ein Druck auf die Bauchdecke derart ausgeübt, dass diese gedehnt wird. Hierdurch bedingt kann das Schlachttier aus der Transportlage herausgedrückt werden, wodurch aufgrund des fortwährend über den Abweiser einwirkenden Drucks eine pendelnde Auslenkung des Schlachttieres erfolgen kann, durch die präzise Schnittpfade verhindert werden. Diese Nachteile werden durch die erfindungsgemäße Lehre ausgeschlossen.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden Ausführungsbeispiels.

Es zeigen:
- Fig. 1: eine Bearbeitungsstation in einer Schlachtstraße,
- Fig. 2: ein 2D-Daten wiedergebendes Bild,
- Fig. 3: ein 3D-Daten wiedergebendes Bild,
- Fig. 4: eine Prinzipdarstellung der Verarbeitung von Signalen und
- Fig. 5: eine Prinzipdarstellung der Verknüpfung von Daten.

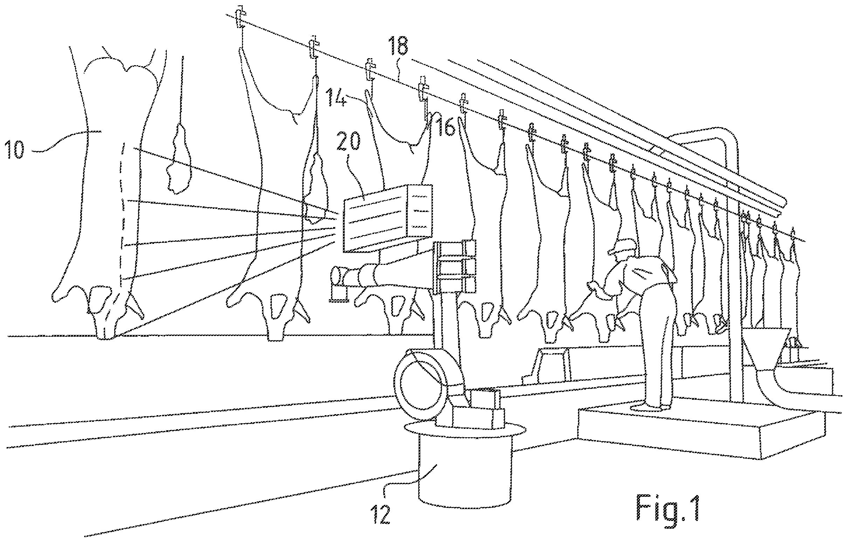

Anhand der Fig. 1 soll rein prinzipiell erläutert werden, wie ein hängend durch eine Schlachtstraße gefördertes Schlachttier 10 optisch gemessen wird, um sodann durch Bildverarbeitung des Messbildes eine Bearbeitung des Schlachttieres 10 mit einem Roboter 12 als Handhabungsgerät automatisch durchführen zu können. Bei dem Roboter 12 kann es sich um einen 6Achs-Industrie-Roboter in Hygienekonfiguration handeln. Aus Gründen der Vereinfachung ist der Roboter nicht mit einer Schutzhülle umgeben, die den hygienischen Anforderungen genügt.

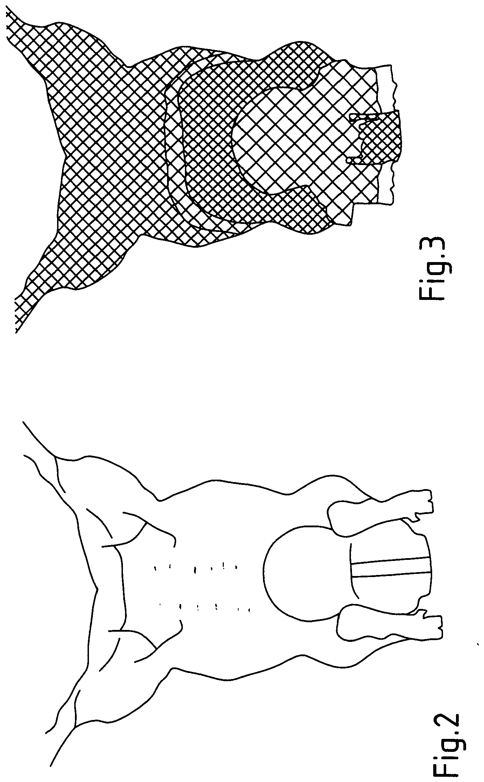

Das Schlachttier 10 wird an seinen Hinterbeinen 14, 16 hängend entlang einer Transportbahn wie Rohrbahn 18 vorzugsweise kontinuierlich gefördert. Dabei wird das Schlachttier 10 an einem optischen Sensor 20 wie Zeilenscanner vorbeigeführt, der insbesondere das Schlachttier 10 über seine gesamte Längen- und Breitenerstreckung aufnimmt. Das so gewonnene Bild wird sodann verarbeitet, um sowohl zweidimensionale (2D-) als auch dreidimensionale (3D-) Daten zu gewinnen. Das zweidimensionale Bild (Fig. 2) kann durch Remissionswerte des Schlachttieres 10 ermittelt werden, wobei insbesondere eine Kantenfilterung erfolgt, um hochgenau die Kontur des Schlachttieres zu ermitteln. Die Kontur beinhaltet dabei nicht nur die Außenkontur, sondern auch Konturen auf der Außenfläche des Schlachttieres wie Brustkonturen. Das entsprechende 2D-Bild wird in Graustufen als Schwarz-Weiß-Bild dargestellt.

Zur Bearbeitung des Schlachttiers 10 sind auch Abstandsinformationen erforderlich, die aus dem 3D-Bild entnehmbar sind (Fig. 3). In farblicher Darstellung weisen die unterschiedlichen Abstände zu dem Sensor 20 unterschiedliche Farben auf. So kann gelb Bereiche charakterisieren, die näher an dem Sensor 20 sind als blau dargestellte Bereiche. Die 3D-Bilder vermitteln zwar in hinreichendem Umfang Abstandsinformationen, ohne jedoch eine präzise Konturbestimmung zu ermöglichen. Dies liegt in dem Umstand begründet, dass die Aufnahme des Schlachttieres während dessen Transports erfolgt, so dass sich eine gewisse Unschärfe ergibt.

Die von derselben Aufnahme gewonnenen 2D- und 3D-Daten werden sodann verknüpft und als Steuersignale dem Roboter 12 zugeführt, der sodann die erforderlichen Arbeiten am Schlachttier 10 vornimmt.

Dadurch, dass die Kontur des Schlachttiers 10 überaus genau erfassbar ist, können infolgedessen hochpräzise Bearbeitungen wie Schnitte durchgeführt werden, so dass nicht nur Schlachtschäden ausgeschlossen werden, sondern auch überaus präzise Schnittpfade durchgeführt werden können.

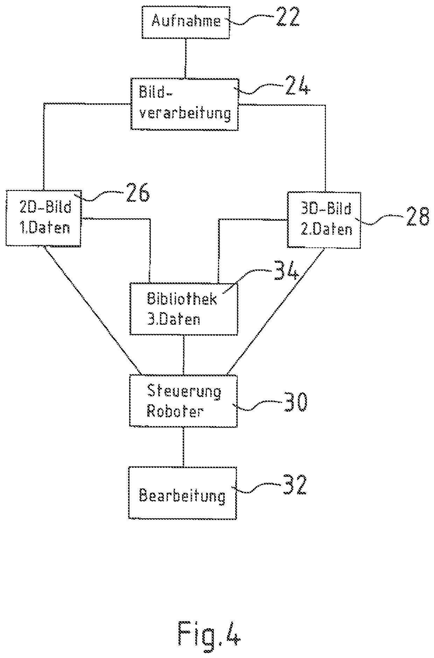

Wie sich aus der Fig. 4 ergibt, können die 2D- und 3D-Daten mit dritten Daten verknüpft werden, die einer Bibliothek entnommen werden. Zur Ermittlung der dritten Daten werden die aus den 2D- und 3D-Daten gewonnenen biometrischen Daten des Schlachttiers 10 ermittelt, denen wiederum in der Bibliothek abgelegte Daten als die dritten Daten zugeordnet sind, die beim optischen Messen des Schlachttieres nicht ermittelbar sind. Hierbei handelt es sich um Charakteristika des Schlachttieres, z. B. optisch nicht erfassbare Bereiche oder Abmessungen wie Lage und Erstreckung von Eingeweide oder Dicke der Bauchdecke. Letztere ist insbesondere für das Öffnen der Bauchdecke und des Brustbeins erforderlich, um ein Verletzen der Innereien beim Öffnen des Schlachttiers 10 auszuschließen, gleichzeitig jedoch zu vermeiden, dass während des Schnittes eine vom Schnitt unabhängige Pendelbewegung hervorgerufen wird; denn während des Durchtrennens der Bauchwand wird innerhalb des Schlachttieres im Schnittbereich ein Abweiser geführt, der die Eingeweide fernhält, um Verletzungen der Eingeweide und somit Schlachtschäden zu vermeiden. Durch die aus den 2D- und 3D-Daten gewonnenen biometrischen Daten des Schlachttieres, zu denen z. B. Länge des Schlachttieres, Körper- und Schinkenvolumen, Bauchausprägung, Kopfform, Länge der Vorder- oder Hinterbeine gehören, und der diesen zugeordneten aufgrund statistischer Messungen ermittelten Bauchdeckendicke kann sodann der Abweiser derart im Inneren des Schlachttieres 10 geführt werden, dass auf die Innenseite der Bauchdecke kein bzw. im Wesentlichen kein Druck ausgeübt wird, so dass durch den Abweiser keine Auslenkung des Schlachttiers senkrecht zum Transportweg erfolgt.

Die erfindungsgemäße Lehre wird rein prinzipiell anhand der Fig. 4 noch einmal erläutert. So wird zunächst mittels des optischen Sensors 20 das Schlachttier 10 gescannt, also gemessen, um aus der Messung eine Gesamtaufnahme des Schlachttieres 10 zu erhalten. Die so gewonnene Aufnahme 22 wird mittels einer Bildverarbeitung 24 derart bearbeitet, dass sich ein 2D-Bild 26 bzw. Daten des 2D-Bildes als erste Daten sowie ein 3D-Bild 28 bzw. Daten des 3D-Bildes als zweite Daten ergeben. Erstere ermöglichen hochpräzise Aussagen über die Kontur und Letztere über die räumliche Erstreckung der aufgenommenen Oberfläche, also das Oberflächenprofil des Schlachttieres 10. Die ersten und zweiten Daten werden sodann verknüpft, um den Roboter 20 zu steuern (Steuerung 30) und somit die Bearbeitung 32 des Schlachttieres 10 vorzunehmen. Dabei ermöglichen die ersten Daten eine hochgenaue Positionsbestimmung für den durchzuführenden Bearbeitungsschritt. Hierbei handelt es sich um Koordinaten in einer Ebene. Um sodann die Raumkoordinaten zu bestimmen, die für das Bearbeiten erforderlich sind, werden die ersten und zweiten Daten verknüpft, um sodann die Bearbeitung vorzunehmen.

Dabei können insbesondere den aus den den ersten und zweiten Daten ableitbaren biometrischen Daten dritte Daten zugeordnet werden, die einer Bibliothek 34 entnommen und sich auf charakteristische Werte des Schlachttieres 10 in Abhängigkeit von den biometrischen Daten beziehen. Entsprechende dritte Daten können z. B. Lage und Erstreckung der Eingeweide oder Dicke der Bauchdecke des Schlachttieres 10 betreffen. Die diesbezüglichen dritten Daten können sodann mit den ersten und zweiten Daten verknüpft werden, um die gewünschten Steuersignale zum Bearbeiten des Schlachttieres zu generieren.

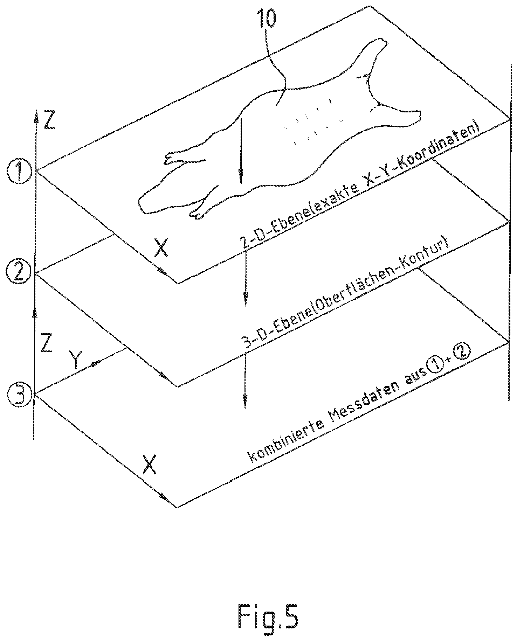

Dies soll noch einmal anhand der Fig. 5 am Grundprinzip der erfindungsgemäßen Lehre verdeutlicht werden. Um hochpräzise Raumkoordinaten an einem zu bearbeitenden Schlachttier 10 zu gewinnen, wird das Schlachttier 10 mit einem optischen Sensor gemessen, um aus der Messung ein 2D-Bild und somit 2D-Daten zu gewinnen (in Fig. 5 entsprechend Daten in der Ebene 1). Von derselben Messung werden sodann 3D-Daten ermittelt, die die Oberflächenkontur des Schlachttieres 10 widerspiegeln (Ebene 2 in Fig. 5). Die 2D-Daten und die 3D-Daten werden sodann kombiniert, um exakte Raumkoordinaten zu erhalten, die zum Bearbeiten für das Schlachttier 10 nötig sind, um ein

Handhabungsgerät präzise steuern zu können. Die kombinierten Messdaten ergeben sich aus der Ebene 3. Es erfolgt quasi eine Überlagerung eines 2- und eines 3D-Bildes, um aus dem 2D-Bild, das z. B. in der XY-Ebene liegt, exakt die Bereiche zu bestimmen, die bearbeitet werden sollen. Da hierzu auch die Höheninformationen der entsprechenden Bereiche benötigt werden, werden die 2D-Daten mit den 3D-Daten verknüpft, die die Z-Koordinate für die XY-Koordinaten zur Verfügung stellen.

## Patentansprüche

1. Verfahren zum automatisierten Bearbeiten, wie Schlacht- und/oder Zerlegearbeiten, von Schlachttieren mittels einer Handhabungseinrichtung, wobei das jeweilige zu bearbeitende Schlachttier optisch gemessen und aus den Messungen durch Bildverarbeitung 2D- und 3D-Daten ermittelt werden und aus den 2D- und 3D-Daten Signale zum Steuern der Handhabungseinrichtung generiert werden,
**dadurch gekennzeichnet,**
**dass** das Schlachttier mit einem optischen Sensor gemessen und aus der jeweiligen Messung sowohl die 2D-Daten als auch die 3D-Daten durch Bildverarbeitung ermittelt werden, dass aus den 2D-Daten der Bereich des Schlachttieres bestimmt wird, der mittels der Handhabungseinrichtung zu bearbeiten ist, und dass die aus derselben Messung durch die Bildverarbeitung ermittelten 3D-Daten zur Berücksichtigung des Oberflächenprofils des Schlachttieres beim Bearbeiten durch die Handhabungseinrichtung einbezogen werden.

2. Verfahren nach Anspruch 1,
**dadurch gekennzeichnet,**
**dass** eine Verknüpfung der 2D-Daten und der 3D-Daten derselben Messung zur Gewinnung der Steuerungssignale für die Handhabungseinrichtung erfolgt.

3. Verfahren nach Anspruch 1 oder 2,
**dadurch gekennzeichnet,**
**dass** die 2D-Daten durch Remissionswerte des Schlachttieres ermittelt werden.

4. Verfahren nach zumindest einem der vorhergehenden Ansprüche,
**dadurch gekennzeichnet,**
**dass** eine Bildverarbeitung des 2D-Bildes zur Kantenhervorhebung durchgeführt wird.

5. Verfahren nach zumindest einem der vorhergehenden Ansprüche,
**dadurch gekennzeichnet,**
**dass** bei der Bildverarbeitung ein Gradientenfilter benutzt wird.

6. Verfahren nach zumindest einem der vorhergehenden Ansprüche,
**dadurch gekennzeichnet,**
**dass** aus den 2D-Daten und den 3D-Daten biometrische Daten des zu bearbeitenden Schlachttieres abgeleitet werden, die mit den biometrischen Daten zugeordneten Daten einer Bibliothek als dritte Daten zur Erzeugung der Steuersignale verknüpft werden, wobei die dritten Daten Charakteristika des zu bearbeitenden Schlachttiers berücksichtigen, die beim optischen Messen unberücksichtigt bleiben.

7. Verfahren nach zumindest einem der vorhergehenden Ansprüche,
**dadurch gekennzeichnet,**
**dass** als dritte Daten z. B. Dicke der Bauchdecke, Lage und/oder Erstreckung der Eingeweide des zu bearbeitenden Schlachttieres berücksichtigt werden.

8. Verfahren nach zumindest Anspruch 1,
**dadurch gekennzeichnet,**
**dass** unter Berücksichtigung der 2D-Daten als erste Daten und der 3D-Daten als zweite Daten sowie der die Dicke der Bauchdecke berücksichtigenden dritten Daten das Öffnen des vertikal hängend transportierten Schlachttieres mit den Verfahrensschritten erfolgt:
- Einschneiden des Schlachttieres in oder nahezu in der Symmetrieebene des Schlachttieres im Halsbereich oder in der Nähe der Hinterbeine,
- Durchführen eines mit Wesentlichen vertikal verlaufenden Schnittes zum Durchtrennen der Bauchdecke und des Brustbeines,
- wobei beim Durchtrennen der Bauchdecke die Eingeweide vom Schnittbereich in der Bauchwand mittels eines in das Schlachttier eingeführten Abweisers ferngehalten werden, der aufgrund der verknüpften ersten, zweiten und dritten Daten drucklos oder im Wesentlichen drucklos entlang Innenseite der Bauchdecke geführt wird.

9. Verfahren nach Anspruch 8,
**dadurch gekennzeichnet,**
**dass** das Schlachttier beim Öffnen an den Hinterbeinen aufgehängt wird,

10. Verfahren nach Anspruch 8 oder 9,
**dadurch gekennzeichnet,**
**dass** das Schlachttier beim Öffnen an den Vorderbeinen aufgehängt wird.

11. Verfahren nach zumindest einem der vorhergehenden Ansprüche,
**dadurch gekennzeichnet,**
**dass** als biometrische Daten bzw. Größen Länge des Schlachttieres, Länge von Vorder- und/oder Hinterbeinen, Körpervolumen, Schinkenvolumen, Bauchausprägung und/oder Kopfform verwendet werden.

## Claims

1. Method for automated processing, such as butchering and/or chopping work, of slaughtered animals by means of a handling device, where the respective slaughtered animal to be processed is optically measured, 2D and 3D data are ascertained from the measurements by image processing, and signals for controlling the handling device are generated from the 2D and 3D data,
wherein
the slaughtered animal is measured with an optical sensor and both the 2D data and the 3D data are ascertained from the respective measurement by image processing, wherein that area of the slaughtered animal which is to be processed by means of the handling device is determined from the 2D data, and wherein the 3D data ascertained from the same measurement by image processing is incorporated during processing by the handling device in order to take account of the surface profile of the slaughtered animal.

2. Method according to claim 1,
wherein
linking of the 2D data and of the 3D data from the same measurement is performed in order to obtain the control signals for the handling device.

3. Method according to claim 1 or 2,
wherein
the 2D data is ascertained from reflectance values of the slaughtered animal.

4. Method according to at least one of the preceding claims,
wherein
image processing of the 2D image is performed in order to highlight the edges.

5. Method according to at least one of the preceding claims,
wherein
a gradient filter is used in image processing.

6. Method according to at least one of the preceding claims,
wherein
biometric data of the slaughtered animal to be processed is derived from the 2D data and the 3D data and is linked to the biometric data of associated data in a library as third data in order to generate the control signals, where the third data takes account of characteristics of the slaughtered animal to be processed which are not taken into account by optical measurement.

7. Method according to at least one of the preceding claims,
wherein
for example the thickness of the abdominal wall and the position and/or extent of the intestines of the slaughtered animal to be processed are taken into account as third data.

8. Method according to at least claim 1,
wherein
taking account of the 2D data as first data, the 3D data as second data and the third data including the thickness of the abdominal wall, the opening of the slaughtered animal being transported while suspended vertically is performed with the following method steps:
- cutting into the slaughtered animal in or almost in the symmetrical plane of the slaughtered animal in the throat area or in the vicinity of the hind legs,
- making a substantially vertical cut to part the abdominal wall and the breastbone,
- where during parting of the abdominal wall the intestines are kept clear of the cutting area in the abdominal wall by means of a deflector which is inserted into the slaughtered animal and is guided without pressure or substantially without pressure along the inside of the abdominal wall based on the linked first, second and third data.

9. Method according to claim 8,
wherein
the slaughtered animal is suspended by its hind legs when opened.

10. Method according to claim 8 or 9,
wherein
the slaughtered animal is suspended by its forelegs when opened.

11. Method according to at least one of the preceding claims,
wherein
the length of the slaughtered animal, the length of the forelegs and/or hind legs, the body volume, the ham volume, the abdomen shape and/or the head shape are used as biometric data or quantities.

## Revendications

1. Procédé pour le traitement automatisé, tel que travaux d'abattage et/ou de découpage, d'animaux d'abattage au moyen d'un dispositif de manipulation, sachant que l'animal d'abattage à traiter est mesuré de manière optique et que des données 2D et 3D sont déterminées par traitement d'images à partir des mesures et qu'à partir des données 2D et 3D sont générés des signaux servant à piloter le dispositif de manipulation,
**caractérisé en ce**
**que** l'animal d'abattage est mesuré à l'aide d'un capteur optique et que les données 2D ainsi que les données 3D sont déterminées par traitement d'images à partir de cette mesure, que la partie de l'animal d'abattage à traiter au moyen du dispositif de manipulation est déterminée à partir des données 2D et que les données 3D déterminées par traitement d'images à partir de cette même mesure sont consultées pour prendre en compte le profil de la surface de l'animal d'abattage lors du traitement au moyen du dispositif de manipulation.

2. Procédé selon la revendication 1,
**caractérisé en ce**
**que** les données 2D et les données 3D de la même mesure sont combinées pour obtenir des signaux de pilotage pour le dispositif de manipulation.

3. Procédé selon la revendication 1 ou 2,
**caractérisé en ce**
**que** les données 2D sont déterminées au moyen des valeurs de réflectance de l'animal d'abattage.

4. Procédé selon au moins une des revendications précédentes,
**caractérisé en ce**
**qu'**a lieu un traitement de l'image en 2D pour faire ressortir les contours.

5. Procédé selon au moins une des revendications précédentes,
**caractérisé en ce**
**qu'**un filtre à gradient est utilisé lors du traitement d'images.

6. Procédé selon au moins une des revendications précédentes,
**caractérisé en ce**
**que** des données biométriques de l'animal d'abattage à traiter sont déduites des données 2D et des données 3D, lesquelles données biométriques sont combinées aux données d'une bibliothèque concernant lesdites données biométriques, qui servent alors de troisièmes données pour la production des signaux de pilotage, sachant que lesdites troisièmes données prennent en compte les caractéristiques de l'animal d'abattage qui n'ont pas été prises en compte lors de la mesure optique.

7. Procédé selon au moins une des revendications précédentes,
**caractérisé en ce**
**que** sont prises par exemple en compte comme troisièmes données l'épaisseur de la paroi abdominale, la position et/ou l'étendue des viscères de l'animal d'abattage à traiter.

8. Procédé selon au moins la revendication 1,
**caractérisé en ce**
**qu'**en considération des données 2D constituant les premières données, des données 3D servant de deuxièmes données et des troisièmes données prenant en compte l'épaisseur de la paroi abdominale a lieu l'ouverture de l'animal d'abattage pendu à la verticale, selon les étapes suivantes :
- incision de l'animal d'abattage au niveau ou presque au niveau du plan de symétrie de l'animal d'abattage dans la partie du cou ou à proximité des pattes arrière,
- réalisation d'une coupe essentiellement verticale pour séparer la paroi abdominale et le sternum,
- sachant que lors du détachement de la paroi abdominale, les viscères de la zone de découpe dans la paroi abdominale sont maintenus à l'intérieur par un déviateur introduit dans l'animal d'abattage qui, grâce aux premières, deuxièmes et troisièmes données combinées, est introduit sans pression ou essentiellement sans pression le long de la face interne de la paroi abdominale.

9. Procédé selon la revendication 8,
**caractérisé en ce**
**que** l'animal d'abattage est suspendu par les pattes arrière lors de l'ouverture.

10. Procédé selon la revendication 8 ou 9,
**caractérisé en ce**
**que** l'animal d'abattage est suspendu par les pattes avant lors de l'ouverture.

11. Procédé selon au moins une des revendications précédentes,
**caractérisé en ce**
**que** sont utilisées comme données/grandeurs biométriques la longueur de l'animal d'abattage, la longueur des pattes avant et/ou arrière, le volume du corps, le volume du jambon, la forme du ventre et/ou la forme de la tête.
